(19) Europäisches Patentamt
European Patent Office
Office européen des brevets

(11) **EP 3 363 678 B1**

(12) **EUROPEAN PATENT SPECIFICATION**

(45) Date of publication and mention
of the grant of the patent:
**01.03.2023 Bulletin 2023/09**

(21) Application number: **17172463.6**

(22) Date of filing: **23.05.2017**

(51) International Patent Classification (IPC):
**B60L 15/20** (2006.01)

(52) Cooperative Patent Classification (CPC):
**B60L 15/2054; B60L 15/2045; B60T 8/00;**
B60L 2200/26; B60L 2240/14; B60L 2240/26;
B60T 2250/02; Y02T 10/64; Y02T 10/72

(54) **SYSTEM AND METHOD FOR OPTIMIZING ENERGY CONSUMPTION OF A GUIDED VEHICLE DURING ACCELERATION OF THE LATTER**

SYSTEM UND VERFAHREN ZUR OPTIMIERUNG DES ENERGIEVERBRAUCHS EINES GEFÜHRTEN FAHRZEUGS BEIM BESCHLEUNIGEN DES LETZTEREN

SYSTÈME ET PROCÉDÉ POUR OPTIMISER LA CONSOMMATION D'ÉNERGIE D'UN VÉHICULE GUIDÉ PENDANT SONACCÉLÉRATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.02.2017 EP 17380007**

(43) Date of publication of application:
**22.08.2018 Bulletin 2018/34**

(73) Proprietor: **Siemens Rail Automation S.A.U.**
**28760 Tres Cantos (Madrid) (ES)**

(72) Inventor: **LOPEZ GOMEZ, Pablo**
**28760 Tres Cantos (ES)**

(74) Representative: **Siemens Patent Attorneys**
**Postfach 22 16 34**
**80506 München (DE)**

(56) References cited:
DE-A1-102015 205 099   GB-A- 2 538 480
JP-A- 2003 230 206     US-A1- 2010 161 164
US-A1- 2015 251 640    US-B1- 6 249 735

- **Miyatake Masafumi ET AL: "Optimization of Train Speed Profile for Minimum Energy Consumption", IEEJ Transactions on Electrical and Electronic Engineering, vol. 5, no. 3, 1 May 2010 (2010-05-01), pages 263-269, XP055866060, US ISSN: 1931-4973, DOI: 10.1002/tee.20528 Retrieved from the Internet: URL:https://onlinelibrary.wiley.com/doi/pd fdirect/10.1002/tee.20528>**

**Description**

The present invention concerns a system and a method for automatic adaptation of an acceleration of a guided vehicle in order to optimize its energy consumption.

The present invention is directed to the optimization of energy consumption of a guided vehicle during its acceleration or deceleration. "Guided vehicle" according to the present invention refers generally to a device for transporting individuals that is guided by at least one guiding means, such as a rail, and refers more particularly to public transport means such as trains or train units, subways, etc., which are guided along a route or railway by at least one rail, in particular by two rails.

A challenging problem regarding guided vehicles transporting passengers remains the optimization of its energy consumption, notably during acceleration and deceleration. Indeed, said energy consumption strongly depends on the weight of the guided vehicle, which may unfortunately vary in function of the number of passengers on-board the guided vehicle, making therefore difficult to choose moving parameters, like an acceleration or deceleration, that would minimize its energy consumption. DE 10 2015 205099 A1 and Miyatake Masafumi ET AL: "Optimization of Train Speed Profile for Minimum Energy Consumption", IEEJ Transactions on Electrical and Electronic Engineering, vol. 5, no. 3, describe general methods for minimizing the power consumption of railway vehicles by adapting the acceleration/deceleration patterns based on the vehicle conditions.

An objective of the present invention is therefore to optimize the energy consumption of a guided vehicle, notably during acceleration and deceleration phases.

The aforementioned objective is achieved by a system and a method for dynamically adapting acceleration curves in function of variations of the weight of the guided vehicle according to the independent claims. Further embodiments and other advantages of the present invention are proposed in the dependent claims.

The present invention proposes therefore to optimize the energy consumed by a guided vehicle by dynamically adapting an acceleration curve to changes of the weight of the guided vehicle, wherein "dynamically" refers to an automatic adaptation of an acceleration curve in function of changes of the weight of the guided vehicle in function of the time: if the acceleration curve is given by dv/dt, i.e. the derivative of v in function of t, then we have $dv/dt = F(W(t))$ with v being the velocity of the guided vehicle, t being the time, and $F(W(t))$ being a function F of the weight $W(t)$ of the guided vehicle. For instance, the present invention enables an automatic and dynamic adaptation of a nominal acceleration curve to changes in weight, wherein the nominal acceleration curve is a predefined acceleration curve that minimizes consumption of energy of the guided vehicle for a given nominal weight N, but is not optimized for other ranges of weights different from N. Acceleration curves according to the present invention refer to curves representing a change of velocity of the guided vehicle with respect to the time. It includes an increase of the velocity of the guided vehicle in function of time, i.e. a positive acceleration, but also a decrease of the velocity of the guided vehicle in function of time, i.e. a negative acceleration. In case of a positive acceleration curve, the guided vehicle is increasing its speed and in case of a negative acceleration curve, also called braking curve, the guided vehicle is decreasing its speed. In the following the wording "acceleration curve" will be used for referring or covering both a curve representing an increase of the velocity in function of time and a curve representing a decrease of the velocity in function of time, unless a distinction is clearly made.

The present invention proposes therefore a system for dynamically adapting an acceleration curve to changes in weight of a guided vehicle, the system comprising:

- a camera system configured for being installed on-board the guided vehicle in order to take images of each entrance and exit door of the guided vehicle at least during a period T of time, wherein for each entrance and exit door the period T of time during which the camera system acquires images for said entrance and exit door preferentially starts at the opening of the entrance and exit door and stops at its closing;

- a processing unit connected to the camera system and to a control system of the guided vehicle in charge of controlling and commanding changes of the guided vehicle velocity according to a determined adapted acceleration curve, said processing unit comprising at least one processor and one memory and being configured for

  o receiving the images taken by the camera system; and

  o processing said images, i.e. analyzing the images, in order to determine a number B of passengers boarding the guiding vehicle and a number L of passengers leaving the guided vehicle during said period T of time in order to determine the total number P of passengers inside the guided vehicle once the entrance and exit door is closed, i.e. at the end of the period T, wherein P = B-L;

  o determining an adapted acceleration curve, i.e. an acceleration curve adapted to the total number P of passengers inside the guided vehicle at the end of the period T. In particular, the processing unit might be configured for first evaluating a total weight W of the guided vehicle once the entrance and exit door is closed, i.e. at the end of the period T, as a nominal weight N of the guided vehicle, for instance its weight free of passengers, plus the total number P times an average weight A per passenger: W = N + P · A. It shall be understood that the nominal weight N could be the weight of the guided vehicle comprising a predefined number of passengers, or at full capacity (maximum weight) or free of passengers (minimum weight). In any case, the system would automatically calculate the difference between the real number of passengers inside the guided vehicle at the end of the period T and a predefined number of passengers corresponding to said nominal weight in order to evaluate the total weight. Then, and second, the processing unit is further configured for determining the adapted acceleration curve in function of the total weight W, which is actually a function of the total number P of passengers inside the guided vehicle. Preferentially, the processing unit might be configured for adapting a nominal acceleration curve of the guided vehicle in function of the total weight W, for instance according to:

$$\frac{dv_2}{dt} = \frac{N}{W} \cdot \frac{dv_1}{dt}$$

wherein $\frac{dv_1}{dt}$ is the variation of a nominal speed v1 in function of the time t representing the nominal acceleration curve and $\frac{dv_2}{dt}$ is the variation of an adapted speed v2 in function of the time t, representing therefore the adapted acceleration curve. According to another embodiment, the memory according to the invention comprises a database storing adapted acceleration curves in function of total weights of the guided vehicle. In this case, the processing unit is configured for determining which adapted acceleration curve corresponds to the previously determined total weight W of the guided vehicle. According to another embodiment, determining an adapted acceleration curve may comprise calculating an adapted acceleration curve using known techniques;

o providing said previously determined adapted acceleration curve to the control system in charge of controlling and commanding changes of velocity of the guided vehicle in function of the determined adapted acceleration curve.

According to the present invention, and preferentially, at least the nominal acceleration curve is predefined in the database of the system and then subsequently adapted according to each measurement of the total weight W of the guided vehicle and/or total number P of passengers. The nominal acceleration curve is notably typically calculated for a nominal weight N of the guided vehicle and/or a nominal number P0 of passengers occupying the guided vehicle in function of its accelerating/braking performances in order to minimize energy consumption of the guided vehicle and can be determined experimentally or theoretically using modeling of the guided vehicle. Alternatively or additionally, the database of the system according to the invention preferentially comprises one or several adapted acceleration curves a_i, wherein each adapted acceleration curves a_i corresponds to (i.e. has been defined for) a range of weights [W_i, W_i+1] and has been calculated experimentally or theoretically in order to minimize energy consumption of the guided vehicle for said range of weights to which it corresponds. In this case, the processing unit is able to determine within which range of weights the total weight W falls, and then to select the adapted acceleration curve corresponding to the determined range of weights.

The present invention further proposes in particular a method for automatically and dynamically adapting an acceleration curve to changes in weight of a guided vehicle, said method comprising:

- acquiring images of each entrance and exit door of the guided vehicle at least during a period T of time starting at the opening of the entrance and exit door and until its closing;
- processing said images in order to determine a number B of passengers boarding the guiding vehicle and a number L of passengers leaving the guided vehicle during said period T of time in order to determine the total number P of passengers inside the guided vehicle once the entrance and exit door closed, wherein P = B-L;
- determining an adapted acceleration curve, i.e. an acceleration curve adapted to the total number P of passengers. In particular, the method comprises evaluating a total weight W of the guided vehicle once the entrance and exit door is closed as a nominal weight N of the guided vehicle free of passengers plus the total number P times an average weight A per passenger: W = N + P · A, and then determining the adapted acceleration curve in function of the total weight W which is a function of the total number P(t) of passengers or in function of a difference between the total weight W(t) and the nominal weight N at a time t corresponding to the end of said period T of time;

- providing the previously determined adapted acceleration curve to a control system in charge of controlling and commanding an acceleration of the guided vehicle according to the determined adapted acceleration curve; and
- controlling and commanding the acceleration of the guided vehicle according to the determined adapted acceleration curve. In particular, the control system automatically controls the acceleration of the guided vehicle according to the previously determined adapted acceleration curve.

Further aspects of the present invention will be better understood through the following drawings, wherein like numerals are used for like and corresponding parts:

Figure 1    schematic side view of a guided vehicle equipped by a system according to the invention.

Figure 2    schematic top view of the guided vehicle according to Fig. 1 with preferred embodiment of the system according to the invention.

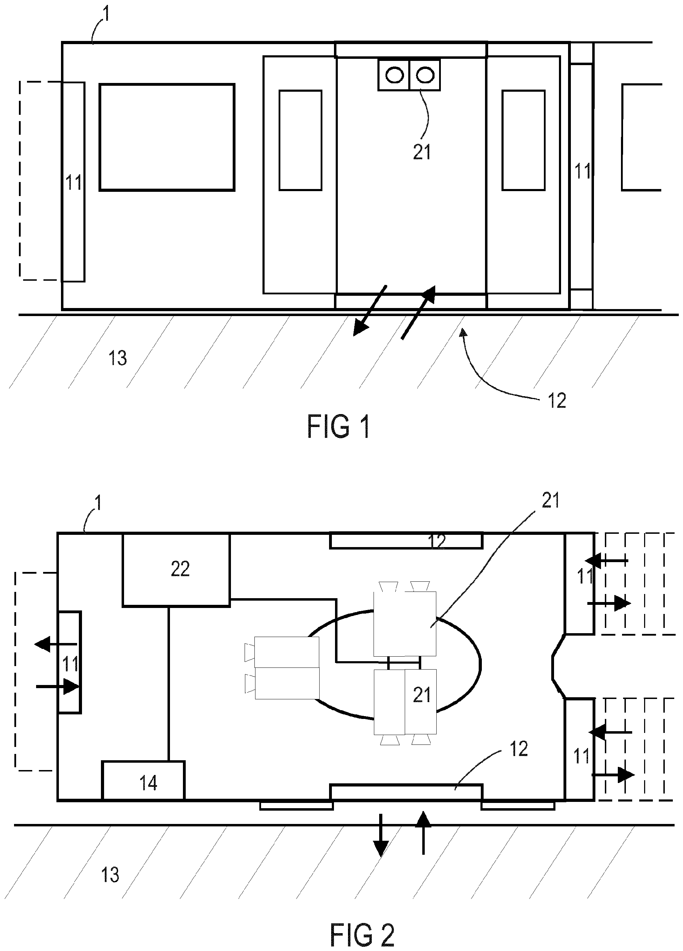

Figure 1 and 2 show a preferred embodiment of a system for automatically and dynamically adapting an acceleration curve to changes in weight of a guided vehicle 1. The system according to the invention is configured for being installed on-board the guided vehicle 1. Typically, the guided vehicle 1 comprises different doors:

- internal doors 11 enabling passengers to move from one part of the guided vehicle to another part of the guided vehicle while remaining inside the guided vehicle. Said internal doors 11 are not of importance for the present invention;
- entrance and exit doors 12 enabling passengers entering the guided vehicle or leaving the latter, for instance from a platform 13 of a station. These entrance and exit doors 12 will be of particular importance for the present invention in order to determine a flow of people entering/leaving the guided vehicle 1.

Indeed, the present invention proposes to install a camera system 21 within the guided vehicle 1, wherein said camera system 21 is configured for acquiring images of flows of passenger entering and leaving the guided vehicle at each entrance and exit door 12. For this purpose, the camera system 21 is configured for imaging each entrance and exit door 12 of the guided vehicle. Preferentially, the camera system is configured for automatically starting an acquisition of images of an entrance and exit door 12 at the time T1 at which said entrance and exit door 12 opens and for automatically stopping said acquisition at a time T2 at which said entrance and exit door 12 closes. For this purpose, the camera system is preferentially connected to a door system of the guided vehicle 1 configured for controlling the opening and closing of the entrance and exit doors 12. The camera system 21 is in particular configured for automatically starting the acquisition of images at reception of a first input from the door system and automatically stopping said acquisition at reception of a second input from the door system, wherein the first input indicates and coincides with the opening of the entrance and exit door 12 and the second input indicates and coincides with the closing of the entrance and exit door 12. By acquiring images of each entrance and exit door 12, the camera system 21 is capable of imaging flows of passengers leaving and entering the guided vehicle 1 trough each entrance and exit doors 21, for instance at each stop of the guided vehicle 1 at a station. Preferentially, the camera system 21 comprises an infrared camera and/or a camera configured for imaging the visible spectrum.

The images so acquired are then transmitted to a processing unit 22 that uses known techniques, such as video counting techniques, for counting the number B of passengers entering (or boarding) the guided vehicle 1 and the number L of passengers leaving said guided vehicle during a period T of time during which the entrance and exit door 12 is opened, i.e. wherein preferentially T equals at least T2-T1. Computer vision techniques for video counting might be used for evaluating a flow of people entering/leaving the guided vehicle when passing the entrance and exit door 12, for instance by using adaptive algorithms configured for identifying and tracking passenger faces and determining a direction of displacement through the entrance and exit door for each passenger appearing in images acquired by the camera system 21.

At the end of the period T of time, i.e. once the entrance and exit door is closed, the flow of passengers having entered and left the guided vehicle 1 is known from the processing of the images acquired by the video system 1. It is thus possible to determine the total number P of passengers occupying the guided vehicle 1 at the end of the period T. The processing unit 22 is notably configured for calculating this total number P by subtracting the number L to the number B. The processing unit 22 is further configured for determining an adapted acceleration curve in function of said total number P of passengers. For instance, the processing unit 22 may comprise a database storing adapted acceleration curves in function of total numbers P of passengers, wherein for instance each adapted acceleration curve is predefined in function of a range of numbers P of passengers, each range being preferentially separated from one another. There is thus an equal number of adapted acceleration curves and ranges of numbers of passengers stored in the database of the system according to the invention, wherein each adapted acceleration curve corresponds to one and only one range of numbers. The processing unit 22 is then capable of classifying the previously determined total number P within one of said ranges of numbers and determining the corresponding adapted acceleration curve. Therefore, depending on which range of numbers the total number P belongs to, the processing unit 22 is then configured for selecting the correct corresponding adapted acceleration curve which will minimize energy consumption during acceleration and deceleration of the guided vehicle 1.

Preferentially, the processing unit 22 is configured for estimating a total weight W of the guided vehicle 1 in function of the total number P of passengers, i.e. its real weight when occupied by the total number P of passengers, by summing a nominal weight N of the guided vehicle (i.e. its weight when it is free of passengers) and the weight of the total number P of passengers on-board, wherein the latter is estimated by associating to each passenger an average weight A. At the end of this calculation process, the processing unit 21 has determined the total weight W of the guided vehicle 1. Then the next step consists in adapting acceleration curves (for instance a curve characterizing the increase of velocity in function of time and a curve characterizing the decrease of velocity in function of time) to the newly estimated weight W of the guided vehicle 1.

According to a first preferred embodiment, the processing unit 22 is configured for selecting in the database an adapted acceleration curve in function of the estimated total weight W. The process is the same as previously described for the total number of passengers, but in this case the processing unit 22 processes the total weight W instead of processing directly the total number of passengers. Therefore, the database according to the invention may store adapted acceleration curves in function of ranges of numbers of passengers and/or ranges of weights. In the latter case, each adapted acceleration curve is predefined in function of one single range of weights. There is thus an equal number of adapted acceleration curves and ranges of weights stored in the database of the system according to the invention, wherein each adapted acceleration curve corresponds to one and only one range of weights. The processing unit 22 is then capable of classifying the previously determined total weight W within one of said ranges of weights and determining the corresponding adapted acceleration curve. Therefore, depending on which range of weights the total weight W belongs to, the processing unit 22 is then capable to select the correct corresponding adapted acceleration curve which will minimize energy consumption during acceleration and deceleration of the guided vehicle 1. According to another preferred embodiment, a memory of the processing unit 22 comprises a nominal acceleration curve which is used for calculating the adapted acceleration curve in function of the calculated total weight W and/or in function of the total number P of passengers. Preferentially, the processing unit 22 is able to automatically choose a method for determining the adapted acceleration curve notably either by calculating an adapted acceleration curve, for instance from a nominal adapted acceleration curve stored in the memory, or by selecting in the database said adapted acceleration curve in function of the total weight W or total number P of passengers as it was described before.

Once the adapted acceleration curve determined by the processing unit 22, the latter transmits said determined adapted acceleration curve to a control system 14 of the guided vehicle 1, wherein said control system 14 is configured for controlling and commanding any acceleration and deceleration of the guided vehicle 1 according to the determined adapted acceleration curve until a new total number P of passengers and/or total weight W is calculated and a new adapted acceleration curve determined. For this purpose, the processing unit 22 is connected to the control system 14 of the guided vehicle 1 in order to exchange data regarding each determined adapted acceleration curve.

To summarize, the present invention proposes a dynamic adaptation of acceleration curves of a guided vehicle 1 (wherein dynamic means that the acceleration curve automatically changes or is automatically adapted in function of the time depending on changes of the weight of the guided vehicle in function of said time) by determining in real time, in particular at each opening followed by a closing of an entrance and exit door, changes in the weight of the guided vehicle 1, so that said acceleration curves remain optimized for the real weight of the guided vehicle, saving by the same way energy that would be otherwise lost due to inappropriate acceleration curves with regard to the real weight of the guided vehicle 1.

## Claims

1. System for optimizing an energy consumed by a guided vehicle by automatically adapting an acceleration curve to changes in weight of the guided vehicle (1) in function of time, the system comprising:

   - a camera system (21) configured for being installed on-board the guided vehicle (1) in order to take images of each entrance and exit door (12) of the guided vehicle (1) at least during a period T of time, wherein the period T of time starts at the opening of the entrance and exit door (12) and ends at its closing (from claim 3);
   - a processing unit (22) connected to the camera system (21) and to a control system (14) of the guided vehicle (1) in charge of controlling and commanding changes of the guided vehicle velocity according to a determined adapted acceleration curve, said processing unit being configured for:

     i. receiving the images taken by the camera system (21); and
     ii. processing said images in order to determine a number B of passengers boarding the guiding vehicle (1) and a number L of passengers leaving the guided vehicle (1) during said period T of time;
     iii. calculating a total number P of passengers inside the guided vehicle (1) at the end of the period T, wherein P = B-L;
     iv. evaluating a total weight W of the guided vehicle (1) at the end of the period T in function of the total number P of passengers inside the guided vehicle (1) at the end of the period T and determining an adapted acceleration curve in function of the total weight W(P), wherein the adapted acceleration curve is configured for minimizing energy consumption of the guided vehicle for the determined total weight W(P);

v. transmitting said determined adapted acceleration curve to the control system (14) in charge of controlling and commanding changes of velocity of the guided vehicle (1) in function of the determined adapted acceleration curve.

2. System (1) according to claim 1, wherein the total weight W at the end of the period T is given by W = N + P · A, with N being a nominal weight of the guided vehicle (1) free of passengers and A being an average weight per passenger.

3. System (1) according to claim 1 or 2, wherein the processing unit (22) is configured for adapting a nominal acceleration curve of the guided vehicle (1) in function of the total number P of passengers and/or the total weight W.

4. System (1) according to claims 1-3, wherein the memory comprises a database storing adapted acceleration curves predefined in function of total numbers P of passengers.

5. System (1) according to claims 1-4, wherein the memory comprises a database storing adapted acceleration curves predefined in function of total weights of the guided vehicle.

6. System according to claim 5, wherein the database comprises one or several adapted acceleration curves a_i, wherein each adapted acceleration curves a_i has been predefined for a range of weights [W_i, W_i+1], the processing unit (22) being configured for determining within which range of weights [W_i, W_i+1] the total weight W falls, and automatically determining the adapted acceleration curves a_i corresponding to the determined range of weights [W_i, W_i+1].

7. Guided vehicle (1) comprising the system according to claims 1-6.

8. Guided vehicle (1) according to claim 7, comprising a door system connected to the camera system (21) and configured for sending a first input to the camera system (21) for starting the acquisition of images and a second input for stopping said acquisition.

9. Method for optimizing an energy consumed by a guided vehicle by automatically adapting an acceleration curve to changes in weight of said guided vehicle (1) in function of time, said method comprising:

- acquiring images of each entrance and exit door (12) of the guided vehicle (1) at least during a period T of time starting at the opening of the entrance and exit door (12) and ending at its closing;
- processing said images in order to determine a number B of passengers boarding the guiding vehicle (1) and a number L of passengers leaving the guided vehicle (1) during said period T of time;
- calculating a total number P of passengers inside the guided vehicle (1) at the end of the period T, wherein P = B-L;
- evaluating a total weight W(P) of the guided vehicle (1) at the end of the period T of time in function of the total number P of passengers inside the guided vehicle (1) at the end of the period T of time;
- determining an adapted acceleration curve in function of said total weight W(P), wherein the adapted acceleration curve is configured for minimizing energy consumption of the guided vehicle for the determined total weight W(P);
- transmitting the previously determined adapted acceleration curve to a control system (14) of the guided vehicle (1) in charge of controlling and commanding an acceleration of the guided vehicle (1) according to the determined adapted acceleration curve;
- controlling and commanding the acceleration of the guided vehicle (1) according to the determined adapted acceleration curve.

10. Method according to claim 9, wherein the total weight W(P) at the end of the period T is given by W(P) = N + P · A, with N being a nominal weight of the guided vehicle (1) free of passengers and A being an average weight per passenger.

11. Method according to claim 9 or 10, comprising adapting a nominal acceleration curve of the guided vehicle (1) in function of the total number P of passengers.

12. Method according to one of the claims 9-11, wherein a database comprises one or several adapted acceleration curves a_i, wherein each adapted acceleration curves a_i has been predefined for a range of weights [W_i, W_i+1], the method comprising determining within which range of weights [W_i, W_i+1] the total weight W(P) falls, and automatically determining the adapted acceleration curves a_i corresponding to the determined range of weights [W_i, W_i+1].

**Patentansprüche**

1. System zum Optimieren des Energieverbrauchs eines spurgebundenen Fahrzeugs durch automatisches Anpassen einer Beschleunigungskurve an Änderungen des Gewichts des spurgebundenen Fahrzeugs (1) in Abhängigkeit von der Zeit, wobei das System Folgendes umfasst:

- ein Kamerasystem (21), das so ausgelegt ist, dass es sich an Bord des spurgebundenen Fahrzeugs (1) installieren lässt, so dass es zumindest in einem Zeitraum T Bilder von jeder Ein- und Ausgangstür (12) des spurgebundenen Fahrzeugs (1) aufnehmen kann, wobei der Zeitraum T beim Öffnen der Ein- und Ausgangstür (12) beginnt und mit deren Schließen endet (aus Anspruch 3),
- eine Verarbeitungseinheit (22), die mit dem Kamerasystem (21) und einem Steuersystem (14) des spurgebundenen Fahrzeugs (1) verbunden ist, das für das Regeln und das Anweisen von Änderungen der Geschwindigkeit des spurgebundenen Fahrzeugs gemäß einer bestimmten angepassten Beschleunigungskurve verantwortlich ist, wobei die Verarbeitungseinheit für Folgendes ausgelegt ist:

i. Empfangen der von dem Kamerasystem (21) aufgenommenen Bilder und
ii. Verarbeiten der Bilder, so dass eine Anzahl B Fahrgäste, die in dem Zeitraum T in das spurgebundene Fahrzeug (1) einsteigen, und eine Anzahl L Fahrgäste bestimmt werden kann, die in dem Zeitraum T aus dem spurgebundenen Fahrzeug (1) aussteigen,
iii. Berechnen einer Gesamtanzahl P Fahrgäste in dem spurgebundenen Fahrzeug (1) am Ende des Zeitraums T, wobei P = B - L,
iv. Schätzen eines Gesamtgewichts W des spurgebundenen Fahrzeugs (1) am Ende des Zeitraums T in Abhängigkeit von der Gesamtanzahl P Fahrgäste in dem spurgebundenen Fahrzeug (1) am Ende des Zeitraums T und Bestimmen einer angepassten Beschleunigungskurve in Abhängigkeit vom Gesamtgewicht W(P), wobei die angepasste Beschleunigungskurve für ein Minimieren des Energieverbrauchs des spurgebundenen Fahrzeugs bei dem bestimmten Gesamtgewicht W(P) ausgelegt ist,
v. Übertragen der bestimmten angepassten Beschleunigungskurve zum Steuersystem (14), das für das Regeln und Anweisen von Änderungen der Geschwindigkeit des spurgebundenen Fahrzeugs (1) in Abhängigkeit von der bestimmten angepassten Beschleunigungskurve verantwortlich ist.

2. System (1) nach Anspruch 1, wobei das Gesamtgewicht W am Ende des Zeitraums T durch W = N + P · A gegeben ist, wobei N ein Nenngewicht des spurgebundenen Fahrzeugs (1) ohne Fahrgäste und A ein Durchschnittsgewicht pro Fahrgast ist.

3. System (1) nach Anspruch 1 oder 2, wobei die Verarbeitungseinheit (22) so ausgelegt ist, dass sie eine Nennbeschleunigungskurve des spurgebundenen Fahrzeugs (1) in Abhängigkeit von der Gesamtanzahl P Fahrgäste und/oder dem Gesamtgewicht W anpassen kann.

4. System (1) nach Anspruch 1-3, wobei der Speicher eine Datenbank umfasst, in der angepasste Beschleunigungskurven gespeichert sind, die in Abhängigkeit von der Gesamtanzahl P Fahrgäste vordefiniert sind.

5. System (1) nach Anspruch 1-4, wobei der Speicher eine Datenbank umfasst, in der angepasste Beschleunigungskurven gespeichert sind, die in Abhängigkeit vom Gesamtgewicht des spurgebundenen Fahrzeugs vordefiniert sind.

6. System nach Anspruch 5, wobei die Datenbank eine oder mehrere angepasste Beschleunigungskurven a_i umfasst, wobei jede angepasste Beschleunigungskurve a_i für einen Gewichtsbereich [W_i, W_i+1] vordefiniert ist, wobei die Verarbeitungseinheit (22) so ausgelegt ist, dass sie bestimmen kann, in welchen Gewichtsbereich [W_i, W_i+1] das Gesamtgewicht W fällt, und automatisch die angepassten Beschleunigungskurven a_i bestimmen kann, die dem bestimmten Gewichtsbereich [W_i, W_i+1] entsprechen.

7. Spurgebundenes Fahrzeug (1) mit dem System nach Anspruch 1-6.

8. Spurgebundenes Fahrzeug (1) nach Anspruch 7, das ein Türsystem umfasst, welches mit dem Kamerasystem (21) verbunden und so ausgelegt ist, dass es für den Beginn der Bilderfassung eine erste Eingabe und für das Einstellen der Erfassung eine zweite Eingabe zum Kamerasystem (21) senden kann.

9. Verfahren zum Optimieren des Energieverbrauchs eines spurgebundenen Fahrzeugs durch automatisches Anpassen einer Beschleunigungskurve an Änderungen des Gewichts des spurgebundenen Fahrzeugs (1) in Abhängigkeit von der Zeit, wobei das Verfahren Folgendes umfasst:

- Erfassen von Bildern von jeder Ein- und Ausgangstür (12) des spurgebundenen Fahrzeugs (1) zumindest in einem Zeitraum T, der beim Öffnen der Ein- und Ausgangstür (12) beginnt und mit deren Schließen endet,
- Verarbeiten der Bilder, so dass eine Anzahl B Fahrgäste bestimmt werden kann, die in dem Zeitraum T in das spurgebundene Fahrzeug (1) einsteigen, und eine Anzahl L Fahrgäste, die in dem Zeitraum T aus dem spurgebundenen Fahrzeug (1) aussteigen,
- Berechnen einer Gesamtanzahl P Fahrgäste in dem spurgebundenen Fahrzeug (1) am Ende des Zeitraums T, wobei P = B - L,
- Schätzen eines Gesamtgewichts W(P) des spurgebundenen Fahrzeugs (1) am Ende des Zeitraums T in Abhängigkeit von der Gesamtanzahl P Fahrgäste in dem spurgebundenen Fahrzeug (1) am Ende des Zeitraums T,
- Bestimmen einer angepassten Beschleunigungskurve in Abhängigkeit von dem Gesamtgewicht W(P), wobei die angepasste Beschleunigungskurve für ein Minimieren des Energieverbrauchs des spurgebundenen Fahrzeugs bei dem bestimmten Gesamtgewicht W(P) ausgelegt ist,
- Übertragen der zuvor bestimmten angepassten Beschleunigungskurve zu einem Steuersystem (14) des spurgebundenen Fahrzeugs (1), das für das Regeln und Anweisen einer Beschleunigung des spurgebundenen Fahrzeugs (1) gemäß der bestimmten angepassten Beschleunigungskurve verantwortlich ist,
- Regeln und Anweisen der Beschleunigung des spurgebundenen Fahrzeugs (1) gemäß der bestimmten angepassten Beschleunigungskurve.

**10.** Verfahren nach Anspruch 9, wobei das Gesamtgewicht W(P) am Ende des Zeitraums T durch W(P) = N + P · A gegeben ist, wobei N ein Nenngewicht des spurgebundenen Fahrzeugs (1) ohne Fahrgäste und A ein Durchschnittsgewicht pro Fahrgast ist.

**11.** Verfahren nach Anspruch 9 oder 10, das das Anpassen einer Nennbeschleunigungskurve des spurgebundenen Fahrzeugs (1) in Abhängigkeit von der Gesamtanzahl P Fahrgäste umfasst.

**12.** Verfahren nach einem der Ansprüche 9-11, wobei eine Datenbank eine oder mehrere angepasste Beschleunigungskurven a_i umfasst, wobei jede angepasste Beschleunigungskurve a_i für einen Gewichtsbereich [W_i, W_i+1] vordefiniert ist, wobei das Verfahren das Bestimmen umfasst, in welchen Gewichtsbereich [W_i, W_i+1] das Gesamtgewicht W(P) fällt, und das automatische Bestimmen der angepassten Beschleunigungskurven a_i, die dem bestimmten Gewichtsbereich [W_i, W_i+1] entsprechen.

**Revendications**

**1.** Système pour optimiser une énergie consommée par un véhicule guidé en adaptant automatiquement une courbe d'accélération aux changements de poids du véhicule guidé (1) en fonction du temps, le système comprenant :

- un système de caméra (21) configuré pour être installé à bord du véhicule guidé (1) afin de prendre des images de chaque porte d'entrée et de sortie (12) du véhicule guidé (1) au moins pendant une période T de temps, dans lequel la période T de temps commence à l'ouverture de la porte d'entrée et de sortie (12) et se termine à sa fermeture (selon la revendication 3) ;
- une unité de traitement (22) connectée au système de caméra (21) et à un système de commande (14) du véhicule guidé (1) en charge de contrôler et de commander des changements de la vitesse du véhicule guidé selon une courbe d'accélération adaptée déterminée, ladite unité de traitement étant configurée pour :

i. recevoir les images prises par le système de caméra (21) ; et
ii. traiter lesdites images afin de déterminer un nombre B de passagers montant dans le véhicule guidé (1) et un nombre L de passagers quittant le véhicule guidé (1) pendant ladite période T de temps ;
iii. calculer un nombre total P de passagers à l'intérieur du véhicule guidé (1) à la fin de la période T, où P = B - L ;
iv. évaluer un poids total W du véhicule guidé (1) à la fin de la période T en fonction du nombre total P de passagers à l'intérieur du véhicule guidé (1) à la fin de la période T et déterminer une courbe d'accélération adaptée en fonction du poids total W(P), dans lequel la courbe d'accélération adaptée est configurée pour minimiser la consommation d'énergie du véhicule guidé pour le poids total W(P) déterminé ;
v. transmettre ladite courbe d'accélération adaptée déterminée au système de commande (14) en charge de contrôler et de commander les changements de vitesse du véhicule guidé (1) en fonction de la courbe d'accélération adaptée déterminée.

**2.** Système (1) selon la revendication 1, dans lequel le poids total W à la fin de la période T est donné par W = N + P · A, avec N étant un poids nominal du véhicule guidé (1) sans passagers et A étant un poids moyen par passager.

3. Système (1) selon la revendication 1 ou 2, dans lequel l'unité de traitement (22) est configurée pour adapter une courbe d'accélération nominale du véhicule guidé (1) en fonction du nombre total P de passagers et/ou du poids total W.

4. Système (1) selon les revendications 1 à 3, dans lequel la mémoire comprend une base de données stockant des courbes d'accélération adaptées prédéfinies en fonction du nombre total P de passagers.

5. Système (1) selon les revendications 1 à 4, dans lequel la mémoire comprend une base de données stockant des courbes d'accélération adaptées prédéfinies en fonction des poids totaux du véhicule guidé.

6. Système selon la revendication 5, dans lequel la base de données comprend une ou plusieurs courbes d'accélération adaptées a_i, dans lequel chaque courbe d'accélération adaptée a_i a été prédéfinie pour une plage de poids [W_i, W_i+1], l'unité de traitement (22) étant configurée pour déterminer dans quelle plage de poids [W_i, W_i+1] le poids total W se situe, et déterminer automatiquement les courbes d'accélération adaptées a_i correspondant à la plage déterminée de poids [W_i, W_i+1].

7. Véhicule guidé (1) comprenant le système selon les revendications 1 à 6.

8. Véhicule guidé (1) selon la revendication 7, comprenant un système de porte connecté au système de caméra (21) et configuré pour envoyer une première entrée au système de caméra (21) pour démarrer l'acquisition d'images et une seconde entrée pour arrêter ladite acquisition.

9. Procédé pour optimiser une énergie consommée par un véhicule guidé en adaptant automatiquement une courbe d'accélération aux changements de poids dudit véhicule guidé (1) en fonction du temps, ledit procédé comprenant :

- l'acquisition des images de chaque porte d'entrée et de sortie (12) du véhicule guidé (1) au moins pendant une période T de temps commençant à l'ouverture de la porte d'entrée et de sortie (12) et se terminant à sa fermeture ;
- le traitement desdites images afin de déterminer un nombre B de passagers montant dans le véhicule guidé (1) et un nombre L de passagers quittant le véhicule guidé (1) pendant ladite période T de temps ;

- le calcul d'un nombre total P de passagers à l'intérieur du véhicule guidé (1) à la fin de la période T, où P = B - L ;
- l'évaluation d'un poids total W(P) du véhicule guidé (1) à la fin de la période T de temps en fonction du nombre total P de passagers à l'intérieur du véhicule guidé (1) à la fin de la période T de temps ;
- la détermination d'une courbe d'accélération adaptée en fonction dudit poids total W(P), dans laquelle la courbe d'accélération adaptée est configurée pour minimiser la consommation d'énergie du véhicule guidé pour le poids total W(P) déterminé ;
- la transmission de la courbe d'accélération adaptée déterminée précédemment à un système de commande (14) du véhicule guidé (1) en charge de contrôler et de commander une accélération du véhicule guidé (1) selon la courbe d'accélération adaptée déterminée ;
- le contrôle et la commande de l'accélération du véhicule guidé (1) en fonction de la courbe d'accélération adaptée déterminée.

10. Procédé selon la revendication 9, dans lequel le poids total W(P) à la fin de la période T est donné par W(P) = N + P · A, avec N étant un poids nominal du véhicule guidé (1) sans passagers et A étant un poids moyen par passager.

11. Procédé selon la revendication 9 ou 10, comprenant l'adaptation d'une courbe d'accélération nominale du véhicule guidé (1) en fonction du nombre total P de passagers.

12. Procédé selon l'une des revendications 9 à 11, dans lequel une base de données comprend une ou plusieurs courbes d'accélération adaptées a_i, dans lequel chaque courbe d'accélération adaptée a_i a été prédéfinie pour une plage de poids [W_i, W_i+1], le procédé comprenant la détermination de la plage de poids [W_i, W_i+1] dans laquelle se situe le poids total W(P), et la détermination automatique des courbes d'accélération adaptées a_i correspondant à la plage de poids déterminée [W_i, W_i+1].

FIG 1

FIG 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102015205099 A1

**Non-patent literature cited in the description**

- **MIYATAKE MASAFUMI et al.** Optimization of Train Speed Profile for Minimum Energy Consumption. *IEEJ Transactions on Electrical and Electronic Engineering,* vol. 5 (3